# EUROPÄISCHE PATENTSCHRIFT

(11) **EP 3 077 784 B1**
(45) Veröffentlichungstag und Bekanntmachung des Hinweises auf die Patenterteilung: **13.06.2018**
(21) Anmeldenummer: 15708748.7
(22) Anmeldetag: 16.02.2015
(51) Int. Cl.: G01M 15/02, B61L 5/00

(54) **ANORDNUNG UND VERFAHREN ZUR PRÜFUNG VON WEICHENANTRIEBEN**
ASSEMBLY AND METHOD FOR TESTING POINT MACHINES
ENSEMBLE ET PROCÉDÉ D'ESSAI DE MÉCANISMES DE MANOEUVRE D'AIGUILLES

(30) Priorität: 03.04.2014 DE 102014206412
(43) Veröffentlichungstag der Anmeldung: 12.10.2016
(73) Patentinhaber: Siemens Aktiengesellschaft, 80333 München (DE)
(72) Erfinder: DUDECK, Sven Gerhard, 81547 München (DE)
(86) Internationale Anmeldenummer: PCT/EP2015/053201
(87) Internationale Veröffentlichungsnummer: WO 2015/149984

(56) Entgegenhaltungen:
- DE-A1-102012 211 377
- DE-U1-202008 002 439
- "PT 10K Multi", , 1. September 2008 (2008-09-01), Seiten 1-2, XP055094675, Gefunden im Internet: URL:http://www.probitron.de/fileadmin/pdf/ datenblatt_multi.pdf [gefunden am 2014-01-02] in der Anmeldung erwähnt
- "Weichenstellsysteme - Richtungsweisende Technik von HANNING & KAHL", , 1. August 2010 (2010-08-01), Seiten 1-16, XP055094669, Gefunden im Internet: URL:http://www.hanning-kahl.de/fileadmin/h uk/Inhalte/Abbildungen/Produkte_Service/Ba hntechnik/Weichenstellsystem/Weichenstells ysteme_01.pdf [gefunden am 2014-01-02]
- "hastema Bahntechnik Schulung", , 6. Oktober 2006 (2006-10-06), Seiten 1-13, XP055094672, Gefunden im Internet: URL:http://www.transmetra.ch/images/storie s/pdf/sensorik/kraftsensoren/dokumente/a06 .applikation_weichenantrieb.pdf [gefunden am 2014-01-02]

## Beschreibung

Ein Weichenantrieb dient zum Umstellen des Fahrweges eines Schienenfahrzeugs am Gleis. Er besteht üblicherweise aus einem Elektromotor, dessen Drehbewegung über eine Spindel- oder Zahnstange in eine Linearbewegung umgesetzt wird. Teil des mechanischen Systems ist meist auch eine Kupplung, die eine zu große Krafteinbringung auf das Gleis verhindert.

Im Zuge der Produktion oder der Wiederaufarbeitung von Weichenantrieben müssen die vom Weichenantrieb erzeugten Kräfte abschließend eingestellt und geprüft werden. Ziel ist es unter anderem, dass die vom Weichenantrieb erzeugten Kräfte gewisse Ober- und Untergrenzen nicht über- bzw. unterschreiten. Zu diesem Zweck werden am Prüfstand Gegenkräfte, die den Kräften der Weichenzunge im späteren Betrieb entsprechen, auf den Weichenantrieb als Prüfling aufgebracht, während dieser auf dem Prüfstand Stellvorgänge ausführt. Weiterhin kann der Prüfstand auch aktiv Zugkräfte auf den Prüfling aufbringen, während dieser keine Stellvorgänge ausführt. Hierzu wird der Weichenantrieb auf den Prüfstand aufgesetzt, befestigt, an das Prüfsystem angeschlossen, getestet, demontiert und schließlich wieder abgenommen.

Die mechanischen Abmaße der Weichenantriebe unterscheiden sich je nach Einsatzgebiet, Hersteller und Entwicklungshistorie sehr stark. Nach außen hin gemeinsam ist allen Weichenantrieben der sogenannte Stellschieber, der die lineare Bewegung und Kraft des Antriebes auf die Weichenzunge überträgt sowie (optional) die sogenannten Prüfschieber, die ebenfalls mit der Weichenzunge verbunden sind und eine mechanische Rückmeldung der Zungenposition an den Antrieb ermöglichen. Idealerweise wird der Weichenantrieb für die Prüfung auf die gleiche Art und Weise befestigt wie später am Gleis (meist über mehrere Verschraubungen). Aufgrund der unterschiedlichen Außenmaße der Antriebe befinden sich die beiden beweglichen Komponenten relativ zu den Befestigungspunkten des Weichenantriebes an unterschiedlichen Positionen.

Aus dem Dokument "PT 10K Multi: Variabler Prüftisch für Weichenstellantriebe", erhältlich im Internet am 31.03.2014 unter http://www.probitron.de/fileadmin/pdf/datenblatt_multi .pdf, ist ein variabler Prüftisch für Weichenantriebe bekannt, welcher aus einem Grundmodul und austauschbaren Prüfmodulen besteht. Das Grundmodul verfügt über eine Hydraulikanlage als Krafterzeuger, eine Steuerung sowie Mess- und Sicherheitstechnik. Für unterschiedliche Modelle von Weichenantrieben stehen individuelle Prüfmodule zur Verfügung, welche laut Abbildung jeweils aus einem Tisch mit Rollen und individuell auf den Weichenantrieb zugeschnittenen Positionshaltern bestehen. Die Anpassung des Kopplungspunktes zwischen Prüfling und Prüfstand-Krafterzeugung erfolgt somit durch Montage des Prüflings auf einem individuell auf den Prüfling zugeschnittenen Prüfmodul.

Eine Gebrauchsmusterschrift DE 20 2008 022 439 U1 beschreibt einen modularen Prüfstand zur Durchführung von vollautomatischen Prüfungen und Erstellungen von Prüfprotokollen von Weichenstellantrieben.

Es stellt sich die Aufgabe, eine Anordnung und ein Verfahren zur Prüfung von Weichenantrieben anzugeben, welche eine Alternative zum Stand der Technik bereitstellen.

Diese Aufgabe wird erfindungsgemäß durch eine Anordnung gemäß Anspruch 1 mit mindestens einer Aufnahmevorrichtung sowie durch ein Verfahren nach Anspruch 24 gelöst. Die Aufnahmevorrichtung umfasst mindestens zwei Träger, welche eingerichtet sind zur Aufnahme eines Weichenantriebs als Prüfling oder zur Aufnahme eines Montagewagens, auf welchem ein Weichenantrieb als Prüfling montiert ist, und eine Mechanik, welche zum Verfahren der Träger sowohl in horizontaler und als auch in vertikaler Richtung eingerichtet ist. Die Anordnung beinhaltet ferner einen Prüfstand, der über einen Krafterzeuger verfügt, welcher eingerichtet ist, um Gegenkräfte auf den Prüfling aufzubringen, während der Prüfling auf dem Prüfstand Stellvorgänge ausführt, wodurch der Prüfstand zum Einstellen und/oder Prüfen von Kräften, welche der Prüfling erzeugt, eingerichtet ist. Der Krafterzeuger und die Mechanik sind mechanisch und elektrisch unabhängig voneinander, sodass
die Träger ohne Beeinflussung des Prüfstands oder des Krafterzeugers verfahrbar sind, wodurch eine vorgegebene Koppelposition zwischen dem Prüfling und dem Krafterzeuger einstellbar ist.

Bei dem Verfahren zum Prüfen eines Weichenantriebs werden mit einer Mechanik mindestens zwei Träger sowohl in horizontaler und als auch in vertikaler Richtung verfahren. Ein Weichenantrieb wird als ein Prüfling auf den Trägern montiert. Alternativ wird ein Montagewagen (20) von der Mechanik mit den Trägern ergriffen und/oder angehoben, auf welchem ein Weichenantrieb als Prüfling befestigt ist. Ein Prüfstand bringt über einen Krafterzeuger Gegenkräfte auf den Prüfling auf, während der Prüfling auf dem Prüfstand Stellvorgänge ausführt, wobei Kräfte, welche der Prüfling erzeugt, eingestellt und/oder geprüft werden. Die Träger werden vor der Montage des Prüflings ohne Beeinflussung des Prüfstands oder des Krafterzeugers verfahren, wodurch eine vorgegebene Koppelposition zwischen dem Prüfling und dem Krafterzeuger eingestellt wird.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden.

Die Aufnahmevorrichtung ermöglicht es, eine Vielzahl von Prüflingen aufnehmen zu können, unabhängig von deren geometrischen Ausmaßen. Dazu stellt sie eine flexible Adaptierungsmechanik bereit, die sich - ggf. automatisiert - in erforderliche Positionen fahren lässt. Somit wird eine hochflexible Lösung geschaffen.

Die Anordnung und das Verfahren ermöglichen eine automatisierte Lösung der Fixierung und Ankopplung der Kraftübertragung für den Weichenantrieb. Vorteilhaft wirkt sich aus, dass die Position des Krafterzeugers und der empfindlichen Messsensorik zur Rückmessung der angelegten Kräfte nicht bewegt werden muss. Weiterhin ist stets gewährleistet, dass die Krafteinbringung während der Messung in Bewegungsrichtung erfolgt.

Gemäß einer Ausführungsform ist die Mechanik zum Einstellen eines horizontalen Abstands zwischen den Trägern eingerichtet.

Dies hat den Vorteil, dass auch Prüflinge mit unterschiedlicher Breite passend aufgenommen und positioniert werden können.

In einer Weiterbildung ist die Mechanik zu einem voneinander unabhängigen Verfahren der Träger sowohl in horizontaler als auch in vertikaler Richtung eingerichtet.

Dies hat den Vorteil, dass auch Prüflinge mit asymmetrischen Abmessungen passend aufgenommen und positioniert werden können.

Gemäß einer Ausführungsform weist die Mechanik zum Verfahren der Träger in horizontaler und vertikaler Richtung horizontale und vertikale Linearführungen, insbesondere Lineargleitlager, Schwalbenschwanzführungen, Profilschienenführungen oder Käfigschienenführungen, auf.

Das Verfahren der Träger kann hierbei insbesondere in horizontaler Richtung durch manuelles Verschieben erfolgen. An der Zielposition wird der Träger anschließend durch Klemmung fixiert. Alternativ oder ergänzend können Linearantriebe zum Einsatz kommen.

In einer Weiterbildung ist die Mechanik für jeden der Träger mit einem eigenen horizontalen Linearantrieb und mit einem eigenen vertikalen Linearantrieb ausgerüstet, welche für ein automatisiertes Verfahren des jeweiligen Trägers in eine erforderliche Position eingerichtet sind.

Die Linearantriebe ermöglichen ein hochgenaues Positionieren der Träger insbesondere auch dann, wenn diese ein hohes Eigengewicht aufweisen oder bereits mit dem Prüfling beladen sind. Weiterhin kann die Positionierung der Träger mittels der Linearantriebe automatisiert werden.

Gemäß einer Ausführungsform ist die Mechanik aus mindestens zwei vertikal montierten Kreuztischen und/oder vertikal montierten XY-Linearantrieben ausgebildet, auf welchen jeweils einer der Träger montiert ist.

Alternativ können auch beide Träger an einem einzigen vertikal montierten Kreuztisch bzw. XY-Linearantrieb montiert werden, wodurch die Einstellmöglichkeiten jedoch begrenzt werden.

In einer Weiterbildung ist jeder Träger auf einem Trägerschlitten montiert, welcher mit dem jeweiligen vertikalen Linearantrieb verfahrbar ist. Jeder vertikale Linearantrieb ist auf einem Querschlitten montiert, welcher mit dem jeweiligen horizontalen Linearantrieb verfahrbar ist.

Gemäß einer Ausführungsform wirken die Linearantriebe mit jeweils parallelen Führungen zusammen, welche zur Führung der jeweiligen Schlitten konstruiert sind. Die Linearantriebe beinhalten jeweils einen hydraulischen oder elektrischen Linearmotor oder Linearaktuator. In einer Weiterbildung beinhaltet die Anordnung eine Steuerung, in welcher Trägerpositionen in Abhängigkeit von Typen von Prüflingen einprogrammiert sind, wobei die Steuerung zur Ansteuerung der Linearantriebe und zum automatisierten Verfahren der Träger in die Trägerpositionen eingerichtet ist.

Gemäß einer Ausführungsform ist die Mechanik ausgelegt, mit den Trägern einen Montagewagen zu ergreifen und/oder anzuheben, auf welchem der Prüfling durch Verschraubung befestigt ist. Die Träger weisen hierzu Befestigungselemente auf, insbesondere innenseitig angeordnete Bolzen, Stifte, Greifarme, Vertiefungen oder horizontale Bohrungen, welche ein Ergreifen des Montagewagens, insbesondere durch Klemmung des Montagewagens zwischen den Trägern, erlauben.

Dies bietet den Vorteil, dass der Prüfling direkt auf dem Montagewagen montiert geprüft werden kann, ohne dass ein gesondertes Umsetzen und Verschrauben des Prüflings erforderlich ist.

In einer Weiterbildung weisen die Träger vertikale Gewindebohrungen auf, welche eine Befestigung des Prüflings durch Verschrauben erlauben.

Dies bietet den Vorteil, dass der Prüfling ebenso wie am Gleis befestigt werden kann.

Gemäß einer Ausführungsform weisen die Träger außenseitig Befestigungsmittel, insbesondere in horizontalen Gewindebohrungen verschraubte Schwalbenschwanzprofile auf, welche für eine Befestigung zusätzlicher Befestigungselemente für den Prüfling, insbesondere Klemmen, eingerichtet sind.

Dies bietet den Vorteil, dass auch Prüflinge mit bisher unbekannten oder ungünstigen Abmessungen sicher auf den Trägern fixiert werden können.

In einer Weiterbildung ist die Aufnahmevorrichtung am Prüfstand selbst oder neben dem Prüfstand auf dem Boden montiert.

Gemäß einer Ausführungsform weist der Prüfstand eine Prüfstand-Schnittstelle aufweist, welche mindestens eine Horizontalführung aufweist. Die Anordnung umfasst weiterhin einen Schlitten, welcher entlang der Horizontalführung verfahrbar ist. Ferner umfasst die Anordnung mindestens zwei der Aunahmevorrichtungen, welche nebeneinander an dem Schlitten montiert sind.

Diese Ausführungsform bietet den Vorteil, dass mit Hilfe des Schlittens eine zweite Aufnahmevorrichtung und damit eine zweite Montageposition bereitgestellt wird. Dies bedeutet, dass während des Prüfvorgangs eines ersten Weichenantriebs, welcher auf einer Prüfposition an dem Schlitten montiert ist, bereits seitlich versetzt ein weiterer Weichenantrieb auf der anderen Aufnahmevorrichtung montiert werden kann, welcher später durch seitliches Verfahren des Horizontalschlittens in die Prüfposition gebracht wird.

In einer Weiterbildung beinhaltet die Anordnung ein Fahrwerk, welches insbesondere aus Rollen, Rädern oder einer Führung besteht, und welches den Schlitten auf einem Untergrund abstützt.

Gemäß einer Ausführungsform beinhaltet die Anordnung mindestens eine Schutzwand, welche zwischen den Aufnahmevorrichtungen auf dem Schlitten montiert ist. Alternativ beinhaltet die Anordnung eine Schutzhaube, welche an den Prüfstand montiert ist.

In einer Weiterbildung beinhaltet die Anordnung einen Adaptionswagen, welcher ein Gestell aufweist, an dem die Aufnahmevorrichtung montiert ist. Das Gestell weist eine Wagen-Schnittstelle auf, über welche der Adaptionswagen mit einer Prüfstand-Schnittstelle des Prüfstands mechanisch koppelbar ist.

Der Adaptionswagen lässt sich schnell und unkompliziert mit dem Prüfstand verbinden. Damit ist es auch möglich, Adaption und Prüfung räumlich komplett voneinander zu trennen. Ein einmal auf dem Adaptionswagen adaptierter Weichenantrieb kann verschiedene weitere Prüfeinrichtungen durchlaufen (z.B. elektrische Tests oder Einlauffahrten), ohne dass erneut manuell adaptiert werden muss.

Die flexible Adaption mittels des beweglichen Adaptionswagens ermöglicht eine Bestückung mit dem Prüfling außerhalb des Prüfstandes. Dies ist beispielsweise vorteilhaft, falls sich der Prüfstand nicht in einem Bereich mit Kranabdeckung befindet. Der Adaptionswagen kann neben gegebenenfalls mehreren Adaptionsstationen auch an andere Prüfstationen, etwa für elektrische Tests oder Einlaufvorgänge für die Weichenantriebs-Kupplung angedockt werden.

Der Adaptionswagen erlaubt es somit, Weichenantriebe in schneller und vor allem beliebiger Reihenfolge ohne zusätzlichen Rüstaufwand über einen oder mehrere Prüfstände zu schicken. Der einfache Stationswechsel hat den zusätzlichen Vorteil, dass der gesamte Prüfablauf so zerlegt werden kann, dass teures Equipment nur für einzelne, optimal ausgenutzte Prüfstationen benötigt wird, und nicht während anderer Prüfungen ungenutzt bleibt. Einfache, aber zeitintensive Prüfaufgaben können auf separate, einfache Prüfstationen ausgelagert werden.

Gemäß einer Ausführungsform beinhaltet die Anordnung eine Adaptionsstation, welche eingerichtet ist für eine mechanische Kopplung der Wagen-Schnittstelle des Adaptionswagens an die Adaptionsstation, und ein Verfahren der Träger sowohl in horizontaler und als auch in vertikaler Richtung mittels der Mechanik.

In einer Weiterbildung weist die Mechanik für jeden der Träger eine Antriebswelle für ein selbsthemmendes Stellgetriebe zum Verfahren des jeweiligen Trägers in einer x-Richtung auf. Weiterhin weist die Mechanik für jeden der Träger eine Antriebswelle für ein selbsthemmendes Stellgetriebe zum Verfahren des jeweiligen Trägers in einer zu x-Richtung orthogonalen y-Richtung auf.

Gemäß einer Ausführungsform weisen die Antriebswellen jeweils einen mechanischen Anschluss zur Drehmomentübertragung auf, über welchen die Antriebswellen bei einer mechanischen Kopplung des Adaptionswagens an eine Adaptionsstation automatisch an Stellantriebe in der Adaptionsstation andockbar sind.

In einer Weiterbildung beinhaltet die Wagen-Schnittstelle einen elektrischen Steckverbinder, welcher bei einer mechanischen Kopplung des Adaptionswagens an den Prüfstand oder die Adaptionsstation automatisch in einem elektrischen Steckverbinder der Prüfstand-Schnittstelle oder der Adaptionsstation gesteckt wird.

Gemäß einer Ausführungsform umfasst beinhaltet der Adaptionswagen einen Stellantrieb für jede der Antriebswellen. Die Adaptionsstation stellt über die elektrischen Steckverbinder elektrische Leistung und Steuersignale für die Stellantriebe zum Verfahren der Träger bereit.

In einer Weiterbildnug umfasst die Anordnung zusätzlich einen Montagewagen, welcher zur Aufnahme des Weichenantriebs eingerichtet ist, und welcher zwischen den Trägern durch einen Formschluss fixierbar ist.

Diese Weiterbildung ermöglicht es, einfache Standard-Montagewägen für die Prüfung direkt zwischen den Trägern aufzunehmen. Hierzu wird der Weichenantrieb zunächst auf dem Standard-Montagewagen montiert. Für die anschließende Prüfung wird der Montagewagen auf den Adaptionswagen gespannt, welcher automatisch an die unterschiedlichen Prüfstationen andocken kann und in der Lage ist, die Prüfkräfte aufzunehmen. Falls es Montagelinien gibt, die ohne Montagewagen arbeiten, kann der Prüfling auch direkt auf die Arme des Adaptionswagens geschraubt werden.

In einer Weiterbildung des Verfahrens werden die Träger unabhängig voneinander sowohl in horizontaler als auch in vertikaler Richtung verfahren.

Gemäß einer Ausführungsform des Verfahrens steuert eine Steuerung, in welcher Trägerpositionen in Abhängigkeit von Typen von Prüflingen einprogrammiert sind, Linearantriebe an und verfährt die Träger automatisiert in eine der Trägerpositionen.

In einer Weiterbildung des Verfahrens wird ein Adaptionswagen mit einer Wagen-Schnittstelle an eine Adaptionsstation angedockt. Hierbei wird ein Steckverbinder der Wagen-Schnittstelle automatisch in einen Steckverbinder der Adaptionsstation gesteckt, wodurch Stellantriebe des Adaptionswagens mit Elektrizität versorgt werden. Alternativ werden Stellantriebe der Adaptionsstation an mechanische Anschlüsse der Wagen-Schnittstelle zur Drehmomentübertragung angedockt. Der Adaptionswagen wird für einen Prüfling oder einen Montagewagen adaptiert, indem die Träger des Adaptionswagens durch die Stellantriebe des Adaptionswagens oder die Stellantriebe der Adaptionsstation in Positionen verfahren werden, welche zur Aufnahme des Prüflings oder des Montagewagens geeignet sind. Der Prüfling wird nun auf den Adaptionswagen montiert. Alternativ wird der Montagewagen zwischen den Trägern formschlüssig geklemmt. Der Adaptionswagen wird abschließend mit seiner Wagen-Schnittstelle an einen Prüfstand angedockt.

Die Anordnung kann zum Einstellen der vorgegebenen Koppelposition zwischen dem Prüfling und dem Krafterzeuger auf dem Prüfstand verwendet werden. Die Aufnahmevorrichtung der Anordnung kann zum Ergreifen und/oder Anheben eines Montagewagens, auf welchem der Prüfling montiert ist, verwendet werden. Die Anordnung kann weiterhin zum Einstellen und/oder Prüfen von Kräften, welche ein Weichenantrieb als Prüfling erzeugt, verwendet werden. Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Figur 1: einen Prüfstand zur Überprüfung eines Weichenantriebs, auf dem der Prüfling fest verschraubt wird,
- Figur 2A: eine Seitenansicht eines Prüfstands mit einer Vorrichtung zur Aufnahme eines Prüflings in einer ersten vertikalen Einstellung,
- Figur 2B: eine Seitenansicht des Prüfstands aus Figur 2A, wobei die Vorrichtung zur Aufnahme des Prüflings vertikal abgesenkt wurde, mit einer Detailansicht eines Längsträgers der Vorrichtung,
- Figur 3A: eine Frontansicht der in Figur 2A gezeigten Vorrichtung,
- Figur 3B: eine Frontansicht der in Figur 2B gezeigten abgesenkten Vorrichtung, mit einer Detailansicht eines Längsträgers,
- Figur 3C: eine Frontansicht einer Vorrichtung zur Aufnahme eines Prüflings, bei der die beiden Längsträger in unterschiedliche vertikale Positionen verfahren wurden, um einen asymmetrischen Prüfling 1 aufzunehmen,
- Figur 4A: eine Aufsicht auf den Prüfstand und die Vorrichtung aus Figur 2A und Figur 3A,
- Figur 4B: eine Aufsicht auf den in Figur 2B und Figur 3B gezeigten Prüfstand mit abgesenkter und seitwärts verfahrener Vorrichtung zur Aufnahme eines Prüflings, wobei der linke Längsträger erneut im Detail gezeigt ist,
- Figur 5: eine Frontansicht auf eine Mechanik, welche sich zum voneinander unabhängigen Verfahren der Träger sowohl in horizontaler als auch in vertikaler Richtung eignet,
- Figur 6: eine detaillierte Seitenansicht der Mechanik aus Figur 5, welche zusätzlich einen Längsträger, einen Prüfling, eine Krafterzeugung und einen Prüfstand zeigt,
- Figur 7A: eine Frontansicht auf einen Montagewagen, auf welchem ein Prüfling verschraubt ist, wobei der Montagewagen zwischen den Längsträgern der in den Figuren 2A bis 6 gezeigten Vorrichtung eingeklemmt ist,
- Figur 7B: eine Detailansicht der Frontansicht aus Figur 7A, welche eine alternative Ausgestaltung der Klemmverbindung zwischen Längsträgern und Montagewagen illustriert,
- Figur 8A: zusätzliche Klemmen, welche über Schwalbenschwanzverbindungen an den Längsträgern montiert werden und zusätzliche Klemmkräfte auf den Prüfling aufbringen, in einer Frontansicht,
- Figur 8B: eine der beiden Klemmen aus Figur 8A in einer Seitenansicht,
- Figur 9: eine Aufsicht auf einen Prüfstand, an dem mittels einer Horizontalführung ein Schlitten mit zwei Montageplätzen für Weichenantriebe als Prüflinge in horizontaler Richtung verfahrbar ist,
- Figur 10: den Prüfstand aus Figur 9, bei dem der Schlitten mit den Montageplätzen nach links verfahren wurde,
- Figur 11: eine Seitenansicht des Prüfstands aus Figur 9 und Figur 10, welche einen Schnitt durch den Schlitten und die Horizontalführung zeigt,
- Figur 12: eine Detailansicht des Prüfstands aus Figur 9 bis Figur 11, mit einer an dem Schlitten montierten mitbewegten Schutzwand,
- Figur 13: eine Detailansicht des Prüfstands aus Figur 9 bis Figur 11 mit einer Schutzhaube, welche über einen Prüfplatz abgesenkt wurde,
- Figur 14: eine Detailansicht des Prüfstands aus Figur 9 bis Figur 11, bei der ein sehr großer Prüfling montiert ist,
- Figur 15: eine Aufsicht auf einen Adaptionswagen mit einstellbaren Trägern,
- Figur 16: ein Andocken des Adaptionswagens aus Figur 15 an einen Prüfstand in einer Seitenansicht,
- Figur 17: eine Detailansicht einer Wagen-Schnittstelle, welche für eine mechanische Koppelung mit einer Prüfstand-Schnittstelle eingerichtet ist, und
- Figur 18: einen Adaptionswagen, welcher an einer Adaptionsstation angedockt ist.

In den Figuren sind gleiche oder funktionsgleiche Elemente mit denselben Bezugszeichen verstehen, sofern nichts anderes angegeben ist.

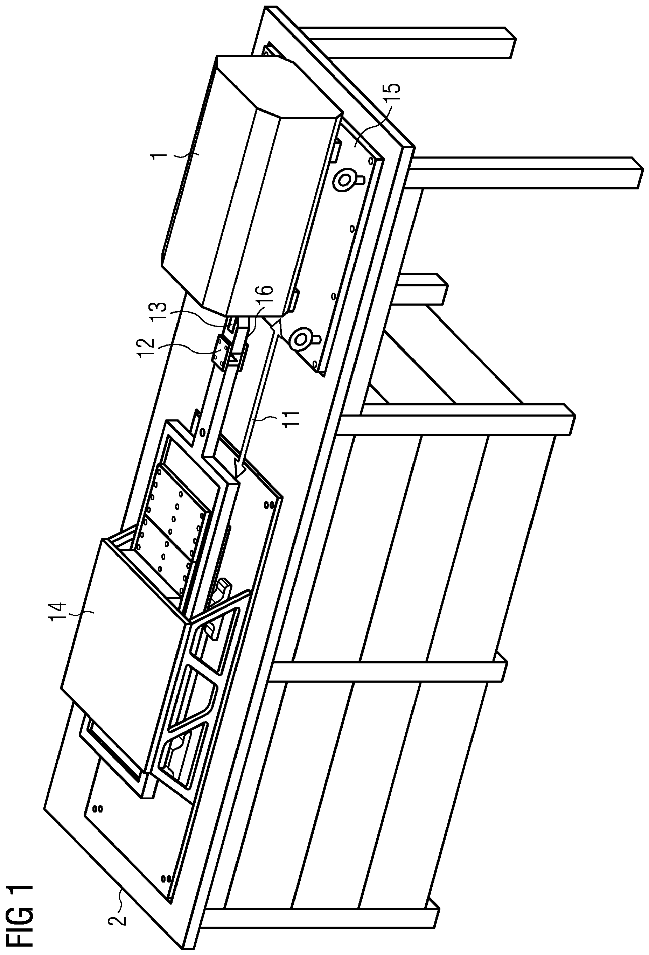

Figur 1 zeigt einen Prüfling 1, hier ein Weichenantrieb, welcher auf einer Adapterplatte 15 befestigt ist, die auf einem Prüfstand 2 verschraubt ist. Ein Stellschieber 13 wird vom Prüfling 1 in einer Kraft- und Bewegungsrichtung 11 angetrieben. Der Stellschieber 13 ist über einen Kopplungspunkt 16 an einen Krafterzeuger 14 gekoppelt, wodurch eine Kraftmessung 12 ermöglicht wird. Der Krafterzeuger 14 auf dem Prüfstand ist beispielsweise ein hydraulischer oder elektrischer Linearantrieb.

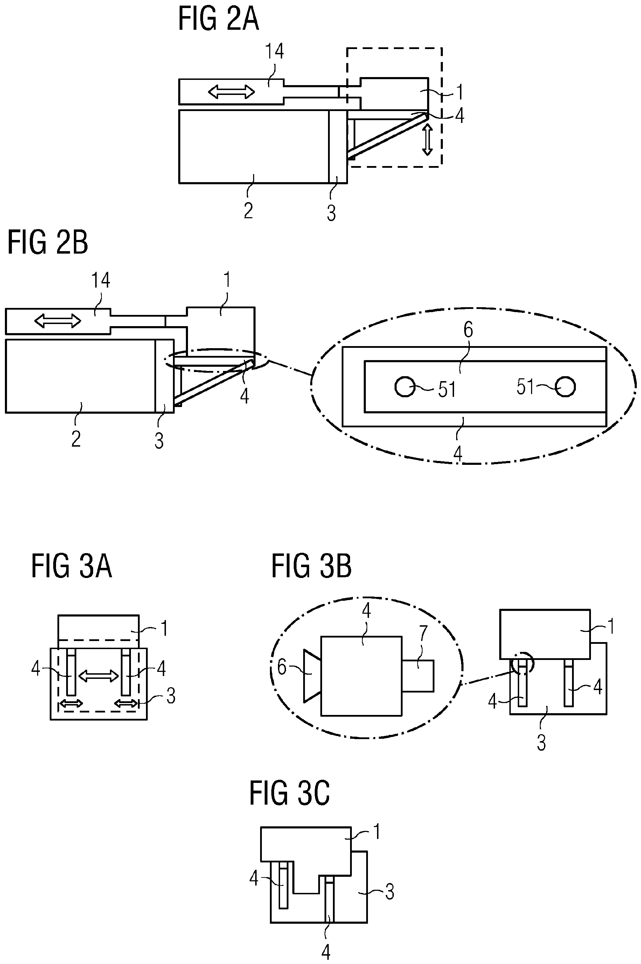

Figur 2A zeigt eine Seitenansicht einer Vorrichtung zur Aufnahme eines Prüflings, welche an einem Prüfstand 2 montiert ist. Auf dem Prüfstand 2 befindet sich auch hier ein Krafterzeuger 14, welcher mit einem Prüfling 1 zur Einstellung und Überprüfung von Kräften, welche der Prüfung 1 erzeugt, zusammenwirkt. Weiterhin kann der Krafterzeuger 14 auch aktiv Zugkräfte auf den Prüfling 1 aufbringen, während dieser keine Stellvorgänge ausführt. Der Prüfling 1 ist auf Längsträgern 4 verschraubt, welche ihrerseits an einer Mechanik 3 aufgehängt sind, die seitlich am Prüfstand 2 befestigt ist. Figur 2A zeigt die Längsträger 4 in einer oberen Position.

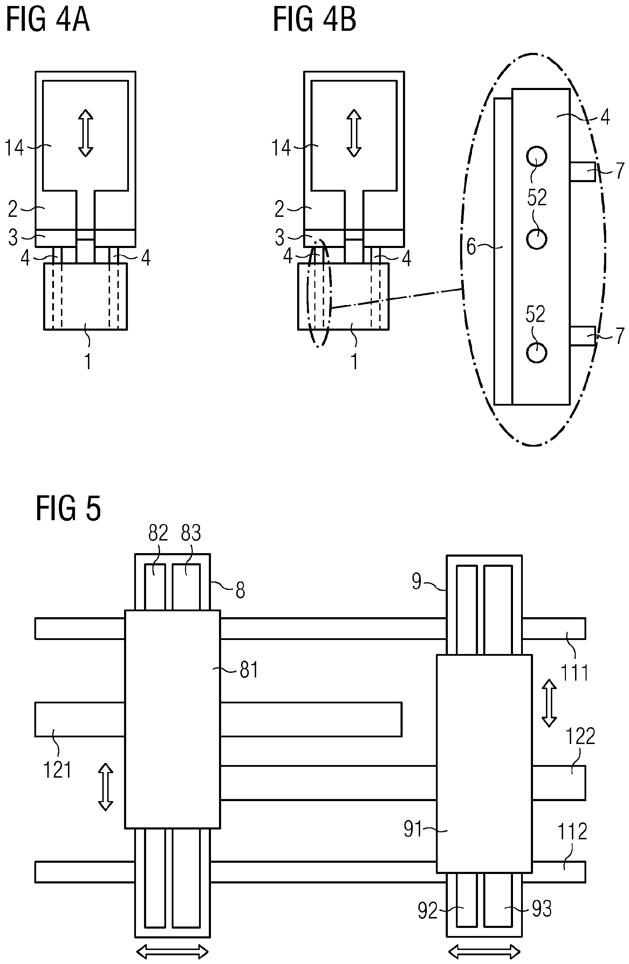

Figur 2B zeigt eine weitere Seitenansicht des Ausführungsbeispiels aus Figur 2A, bei der die Längsträger 4 vertikal abgesenkt wurden. Figur 2B enthält weiterhin (wie auch Figur 3B und Figur 4B) eine Detailansicht des vorderen beziehungsweise linken Längsträgers 4. In der Seitenansicht des Längsträgers 4 in Figur 2B ist ein Schwalbenschwanzprofil 6 sichtbar, welches in horizontalen Gewindebohrungen 51 im Längsträger 4 verschraubt ist.

Figur 3A zeigt eine Frontansicht des Ausführungsbeispiels aus Figur 2A, wobei die Längsträger 4 wie in Figur 2A am oberen Anschlag positioniert sind. Die Pfeile in Figur 3A deuten an, dass die Längsträger 4 horizontal in beiden Richtungen verschiebbar sind. Auch der Abstand zwischen den Längsträgern 4 ist einstellbar.

Figur 3B zeigt eine Frontansicht des Ausführungsbeispiels mit entsprechend Figur 2B abgesenkten Längsträgern 4. Durch das Absenken der Längsträger 4 wird es möglich, einen Prüfling 1 zu montieren, der eine höhere Bauhöhe aufweist als der Prüfung 1 aus Figur 2A beziehungsweise Figur 3A. Durch Absenken der Längsträger 4 wird gewährleistet, dass der im Zusammenhang mit Figur 1 erläuterte Kopplungspunkt 16 stationär gehalten werden kann. Dies hat den Vorteil, dass die Position des Krafterzeugers 14 sowie die empfindliche Messsensorik für die in Figur 1 gezeigte Kraftmessung 12 nicht bewegt werden müssen. Weiterhin ist gewährleistet, dass die Krafteinbringung seitens des Krafterzeugers 14 und des Prüflings 1 stets in der in Figur 1 gezeigten Kraft- und Bewegungsrichtung 11 erfolgt. Da der Krafterzeuger 14 und die Mechanik 3 mechanisch und elektrisch voneinander unabhängig sind, können die Längsträger 4 ohne Beeinflussung der empfindlichen Messsensorik und des Krafterzeugers 14 in die jeweils erforderliche Position verfahren werden.

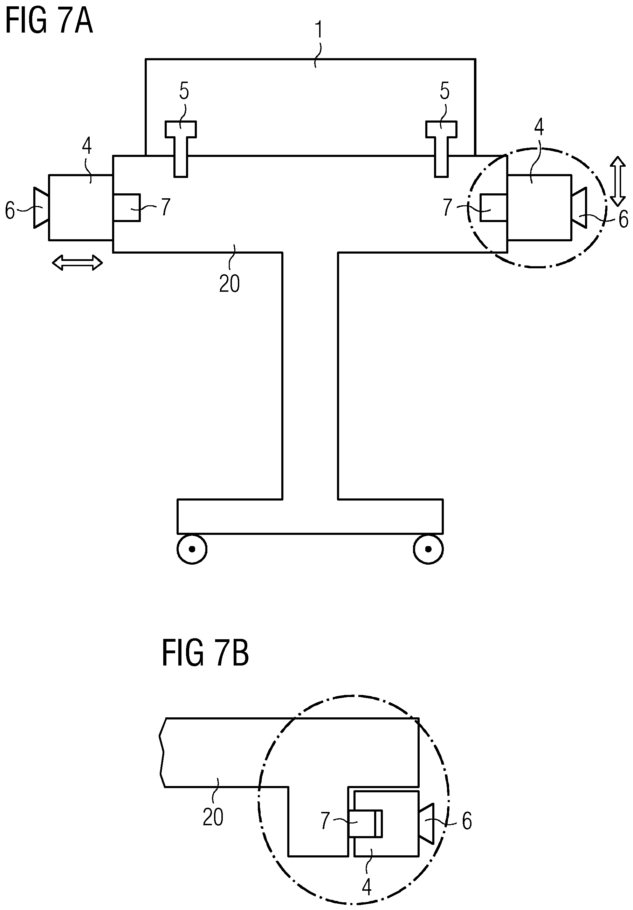

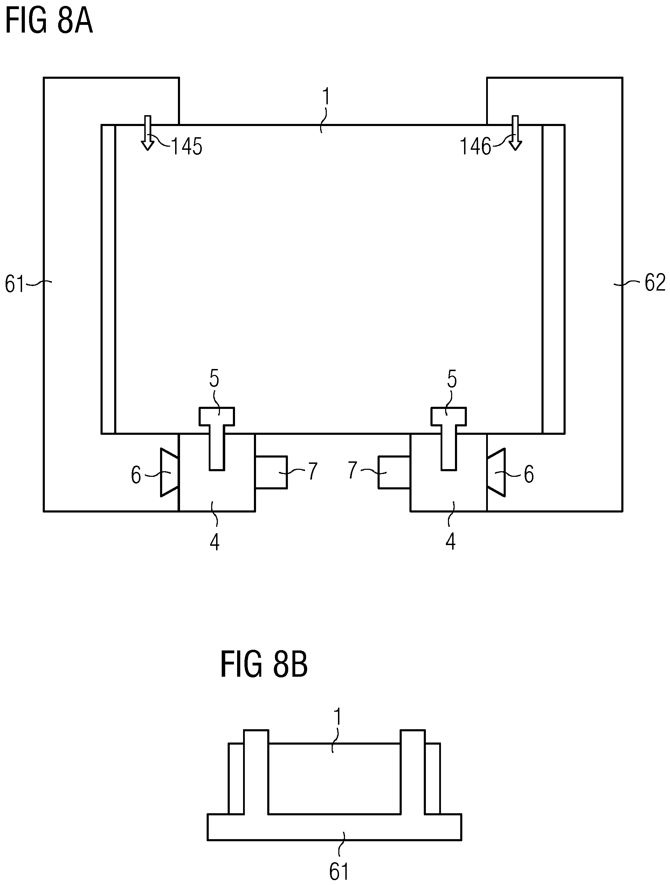

Figur 3B zeigt zusätzlich analog zu Figur 2B den linken Längsträger 4 in einer Detailansicht, wobei erneut das Schwalbenschwanzprofil 6 erkennbar ist. Dieses dient zum Aufschieben weiterer Befestigungselemente, insbesondere die in Figur 8A und Figur 8B gezeigten Klemmen 61, 62, mit welchen sich Prüflinge 1 mit besonderen Abmessungen zusätzlich befestigen lassen. Auf der Innenseite des Längsträgers 4 zeigt Figur 3B in der Detailansicht Bolzen 7, welche der Adaption eines Montagewagens 20 wie in Figur 7A gezeigt dienen.

Figur 3C zeigt eine Frontansicht einer Variante der Vorrichtung aus Figur 2A bis 3B, bei der die beiden Längsträger in unterschiedliche vertikale Positionen verfahren wurden, um einen asymmetrischen Prüfling 1 aufzunehmen.

Figur 4A zeigt eine Aufsicht auf die Vorrichtung, welche mit der Frontansicht in Figur 3A und der Seitenansicht in Figur 2A korrespondiert.

Figur 4B zeigt entsprechend eine Aufsicht, welche mit der Seitenansicht aus Figur 2B und der Frontansicht aus Figur 3B korrespondiert. Hierbei wird ersichtlich, dass die Längsträger 4 nach links verfahren wurden, um einen horizontal asymmetrischen Prüfling 1 aufzunehmen. Der linke Längsträger 4 ist auch in der Aufsicht in Figur 4B in einer Detailansicht vergrößert gezeigt. Neben dem bereits erläuterten Schwalbenschwanzprofil 6 und den Bolzen 7 werden in der Aufsicht vertikale Gewindebohrungen 52 sichtbar, in welchen der Prüfling 1 verschraubt werden kann. Durch Vorsehen einer ausreichenden Anzahl geeignet positionierter vertikaler Gewindebohrungen 52 ist sichergestellt, dass die Prüflinge 1 auch in der dritten Dimension, welche durch die Mechanik 3 nicht eingestellt werden kann, ausreichend flexibel positioniert werden können.

Figur 5 zeigt die Mechanik 3 aus den Figuren 2A bis 4B im Detail in einer Frontansicht. Auf einer oberen Querschlittenführung 111 und einer unteren Querschlittenführung 112 sind ein linker Querschlitten 8 und ein rechter Querschlitten 9 horizontal verfahrbar gelagert. Der linke Querschlitten 8 wird entlang der horizontalen Führungen 111, 112 mittels einer oberen Linearachse 121 verschoben. Entsprechend wird der rechte Querschlitten 9 entlang der Führungen 111, 112 mittels einer unteren Linearachse 122 verfahren. Entsprechend Figur 5 sind der linke Querschlitten 8 und der rechte Querschlitten 9 unabhängig voneinander horizontal verfahrbar.

Auf dem linken Querschlitten 8 ist ein linker Montageschlitten 81 montiert, welcher auf einer linken Montageschlittenführung 82 geführt ist und durch eine linke Linearachse 83 angetrieben wird. Auf dem linken Montageschlitten 81 ist der linke Längsträger 4 montiert, welcher in den Figuren 2B, 3B und 4B im Detail gezeigt wird.

Entsprechend ist auf dem rechten Querschlitten 9 ein rechter Montageschlitten 91 montiert, welcher seinerseits auf einer rechten Montageschlittenführung 92 geführt ist und durch eine rechte Linearachse 93 angetrieben wird. Auf dem rechten Montageschlitten 91 ist der rechte Längsträger 4 montiert, der in den Figuren 3A, 3B, 3C, 4A und 4B gezeigt wurde.

Bei den Linearachsen handelt es sich um elektrische oder hydraulische Linearantriebe, Linearmotoren oder Linearaktuatoren. Geeignete robuste Linearantriebe und Trägerkonstruktionen sind etwa von Gabelstaplern bekannt, deren stählerne Zinken in ihrem horizontalen Abstand verstellbar sind und mittels eines hydraulischen Antriebs vertikal verfahren werden können.

In einer alternativen Ausgestaltung werden die horizontalen, ggf. auch die vertikalen Linearantriebe durch manuelle Einstellvorrichtungen ersetzt. In einer weiteren alternativen Ausgestaltung ist jeweils nur ein Linearantrieb für das horizontale und/oder vertikale Verfahren beider Träger vorgesehen, sodass sich die Längsträger 4 in horizontaler und/oder vertikaler Richtung lediglich synchron verfahren lassen.

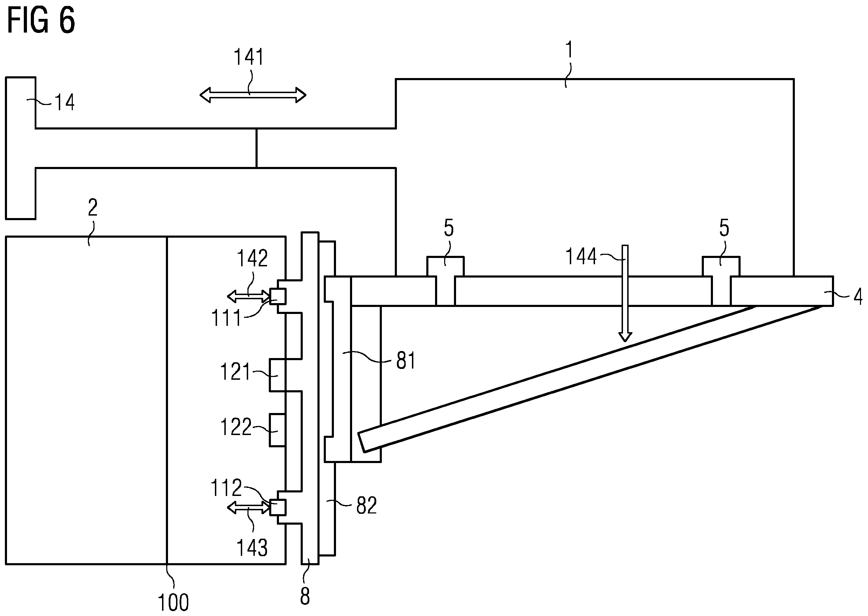

Figur 6 zeigt eine Seitenansicht der Vorrichtung entsprechend der Frontansicht aus Figur 5, welche auf Höhe der Mechanik 3 geschnitten war. In der Seitenansicht der Figur 6 ist der linke Querschlitten 8 sichtbar, der auf der oberen Querschlittenführung 111 und der unteren Querschlittenführung 112 geführt wird, und mittels der oberen Linearachse 121 angetrieben wird. Auf dem linken Querschlitten 8 ist der linke Montageschlitten 81 montiert, auf welchem der linke Längsträger 4 montiert ist. Entsprechend Figur 6 wirken Prüfkräfte 141 zwischen dem Krafterzeuger 14 und dem Prüfling 1, da der Prüfling als Weichenantrieb im Zusammenspiel mit dem Krafterzeuger 14 simulierte Weichenstellvorgänge ausführt. Zusätzlich wirkt eine Gewichtskraft 144 des Prüflings auf den Längsträger 4 ein. Die obere Querschlittenführung 111 muss als erste Kraft 142 eine Kraft aufnehmen, welche sowohl aus der Reactio auf die Prüfkräfte 141 als auch aus der Gewichtskraft 144 des Prüflings 1 resultiert. Gleiches gilt für die untere Querschlittenführung 112, auf welche folglich eine zweite Kraft 143 einwirkt. Neben der Aufhängung der Querschlittenführungen 111, 112 muss daher auch eine Schnittstelle 100 zwischen der gesamten Mechanik und dem Prüfstand 2 ausreichend robust ausgeführt sein, um der Gewichtskraft 144 des Prüflings 1 zuzüglich der Reactio auf die Prüfkräfte 141 standhalten zu können.

Alternativ zu Figur 6 kann die Schnittstelle 100 auch über den Boden realisiert sein, indem die Mechanik zum Verfahren der Längsträger unmittelbar am Boden verschraubt wird. Prüfstand 2 und Mechanik sind in dieser Variante getrennt befestigt.

Figur 6 zeigt die Längsträger 4 in einer leicht abgesenkten Position. Dies gewährleistet erneut, dass der Kopplungspunkt und in der Folge auch der Krafterzeuger 14 auf dem Prüfstand 2 in definierter Höhe konstant gehalten werden kann.

Figur 7A zeigt eine weitere Frontansicht der Vorrichtung. Ein Montagewagen 20 wird durch geeignetes horizontales Verfahren, hier ein Zusammenziehen, der Längsträger 4 mittels der Bolzen 7 formschlüssig geklemmt und gesichert. Zusätzlich zu den in Figur 7A gezeigten Pfeilen ist hierbei, wie bereits zuvor erläutert, jeder der Längsträger 4 sowohl in horizontaler als auch in vertikaler Richtung verfahrbar. Dies hat zur Folge, dass der geklemmte Montagewagen 20 als Ganzes mittels der Längsträger 4 angehoben werden kann. Möglich ist es auch, den Montagewagen 20 zunächst anzuheben, das Fahrgerüst abzunehmen, und den Montagewagen 20 anschließend in eine tiefere Position zu verfahren, als es das Fahrgestell zulassen würde.

Auf dem Montagewagen 20 ist der Prüfling 1 über Schrauben 5 fest verschraubt. Für den Einsatz am Prüfstand ist es erforderlich, dass die Aufnahmeplatte des Montagewagens 20 stark genug ist, um die zuvor erläuterten Prüfkräfte aufnehmen und über die Längsträger 4 an die Mechanik weitergeben zu können. Die Basis des Montagewagens 20 beziehungsweise das Fahrgestell muss hingegen keine Prüfkräfte aufnehmen, da der Montagewagen 20 in Höhe seiner Aufnahmeplatte geklemmt wird.

Figur 7B zeigt ein Detail aus Figur 7A in einer abweichenden Ausführung. Entsprechend Figur 7B ist der Bolzen 7 nicht am Längsträger 4, sondern am Montagewagen 20 angebracht. Der Längsträger 4 weist in diesem Fall eine passende Bohrung beziehungsweise Aussparung für den Bolzen 7 auf. Entsprechend Figur 7B wird auf die Montage des Bolzens am Längsträger 4 verzichtet, falls dieser bei direkter Montage des Prüflings 1 auf dem Längsträger 4 im Weg ist.

Figur 8A zeigt eine linke Klemme 61, welche auf das Schwalbenschwanzprofil 6 des linken Längsträgers 4 aufgesteckt ist und eine erste Klemmkraft 145 auf den Prüfling 1 aufbringt, welcher hier mittels Schrauben 5 auf den Längsträgern 4 verschraubt ist. Entsprechend ist eine rechte Klemme 62 auf das Schwalbenschwanzprofil 6 des rechten Längsträgers 4 aufgesteckt und bringt eine zweite Klemmkraft 146 auf den Prüfling 1 auf.

Analog hierzu zeigt Figur 8B eine Seitenansicht der linken Klemme 61 und des Prüflings 1. Mittels der Klemmen 61, 62 lassen sich auch Prüflinge 1 fest auf den Längsträgern 4 verspannen, welche sich durch die Schrauben 5 nur unzureichend oder gar nicht befestigen lassen. Dies bietet den Vorteil, dass auch Prüflinge 1 mit ungewöhnlichen Abmessungen adaptiert werden können.

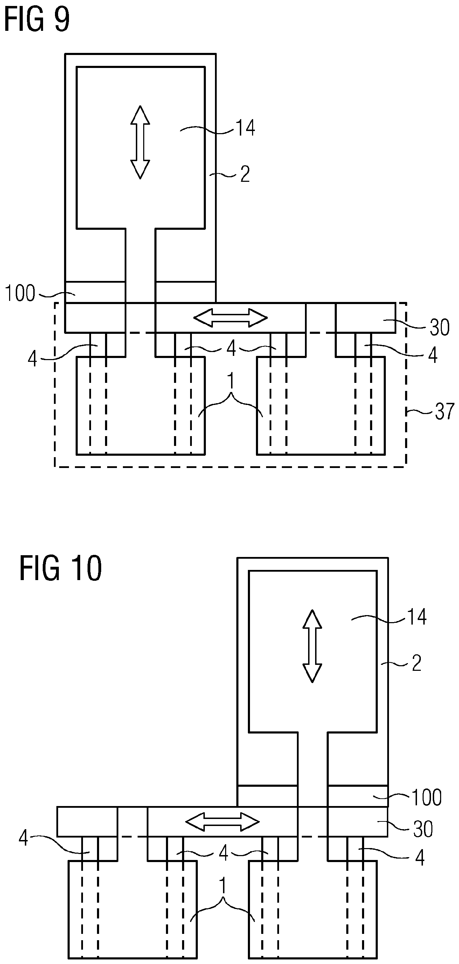

Figur 9 zeigt eine Aufsicht auf einen Prüfstand 2 mit einer Doppelaufnahme, welche aus einem Schlitten 30 besteht, welcher an einer Prüfstand-Schnittstelle 100 montiert ist. An dem Schlitten 30 sind zwei Aufnahmen für einen Weichenantrieb montiert, welche jeweils aus zwei individuell einstellbaren Längsträgern 4 bestehen. Auf jeder der Aufnahmen ist ein Weichenantrieb als Prüfling 1 montiert. Der bewegte Bereich 37 kann seitlich entlang der Prüfstand-Schnittstelle 100 verfahren werden, wodurch auch der rechte Prüfling 1 in eine Prüfposition vor einen Krafterzeuger 14 des Prüfstands 2 verfahren werden kann. In der in Figur 9 gezeigten Position wird der linke Prüfling 1 geprüft, während der rechte Prüfling 1 ausgetauscht werden kann. Hierbei kann mittels der einstellbaren Längsträger 4 auf der rechten Seite eine Adaption an den nächsten Weichenantrieb erfolgen.

Die flexible Aufnahme aus den vorangegangenen Ausführungsbeispielen wird somit doppelt bereitgestellt, wobei beide Aufnahmen an dem gemeinsamen, horizontal verschiebbaren Schlitten 30 montiert werden. Hierdurch kann der nächste Prüfling 1 bereits adaptiert werden, während der aktuelle Prüfling 1 in der Prüfposition noch in Flucht mit der stationären Krafterzeugung 14 positioniert ist.

Durch Anbringen der zweiten Aufnahme parallel zur ersten auf dem gemeinsamen, horizontal beweglichen Schlitten 30 lassen sich die beiden Aufnahmen schnell vor der Krafterzeugung 14 austauschen. An der Aufnahme, welche sich jeweils nicht vor der Krafterzeugung 14 befindet, kann der Prüfling gewechselt werden, ohne die Prüfung des anderen Prüflings zu behindern. Die Adaptionsposition befindet sich abwechselnd links und rechts von der Prüfposition. Der Positionswechsel kann manuell oder automatisch erfolgen.

Figur 10 zeigt die Doppelaufnahme aus Figur 9, nachdem der auf der rechten Seite des bewegten Bereichs ausgetauschte Prüfling 1 gemeinsam mit dem Schlitten 30 vor den Krafterzeuger 14 am Prüfstand 2 verfahren wurde. Nunmehr befindet sich die Prüfposition folglich auf der rechten Seite, während in der Adaptionsposition auf der linken Seite ein neuer Prüfling 1 montiert werden kann.

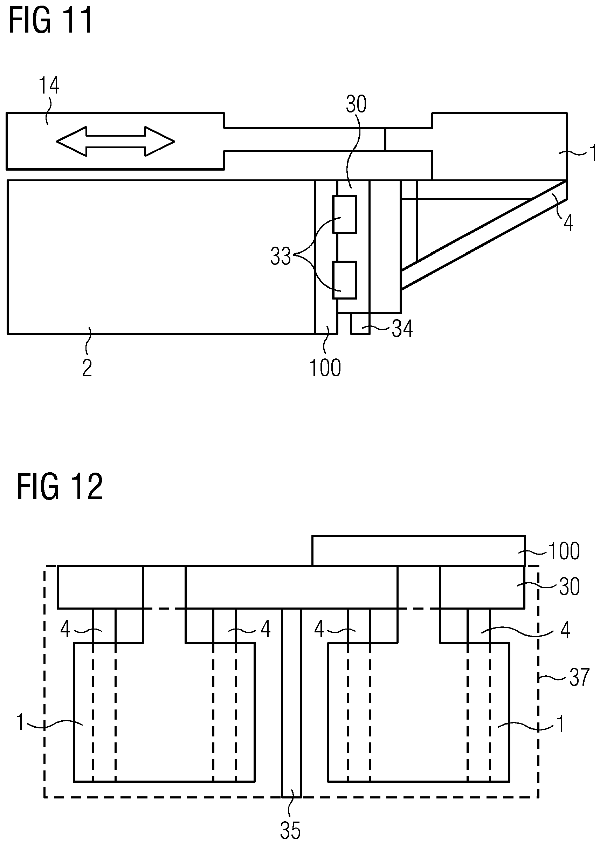

Figur 11 eine Seitenansicht der Doppelaufnahme. Der Schlitten 30 ist mittels einer oder mehrerer Horizontalführungen 33 mit der Prüfstand-Schnittstelle 100 verbunden. Die Horizontalführungen 33 müssen die Prüfkräfte übertragen können, welche im Kontext von Figur 6 bereits erläutert wurden. Der Schlitten 30 wird mittels eines Fahrwerks 34 auf dem Untergrund abgestützt. Hierbei ist der Schlitten 30 beispielsweise auf Rollen, Rädern oder einer Schiene gelagert, welche als zusätzliche Führung für die Horizontal-Bewegung dienen können.

Figur 12 zeigt ein Ausführungsbeispiel der Doppelaufnahme aus Figur 9 bis Figur 11, bei dem die beiden Aufnahmen durch eine Schutzwand 35 für den Arbeitsschutz eines Monteurs getrennt sind.

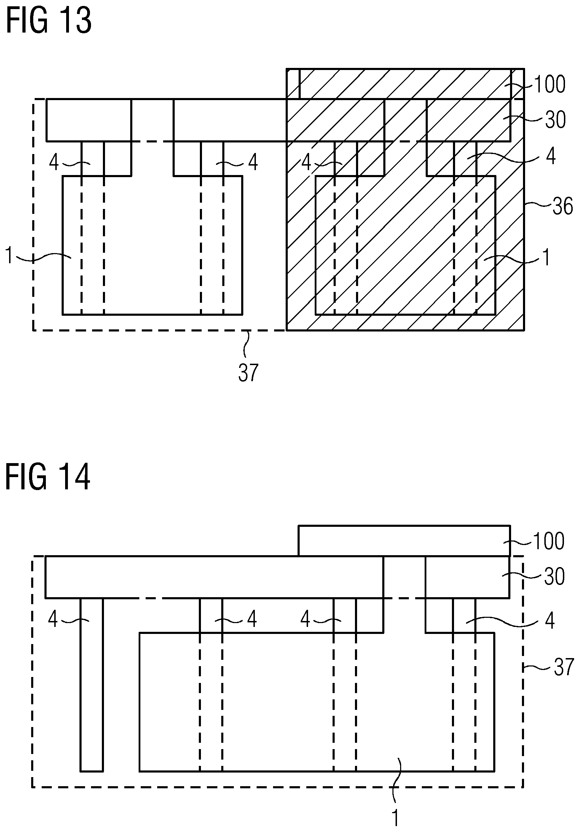

Figur 13 zeigt ein alternatives Ausführungsbeispiel, bei dem eine Schutzfarbe 36 über der Prüfposition abgesenkt wird.

Beide Ausführungsbeispiele dienen dazu, eine mechanische Gefährdung für einen Monteur an der Adaptionsposition auszuschließen.

Figur 14 zeigt ein weiteres Ausführungsbeispiel der Doppelaufnahme aus Figur 9 bis Figur 11, bei dem ein sehr großer Prüfling 1 über beide Aufnahmen hinweg auf drei der Längsträger 4 montiert ist. Dies erlaubt es, auch sehr große Prüflinge 1 abzustützen und für den Prüfstand 2 zu adaptieren.

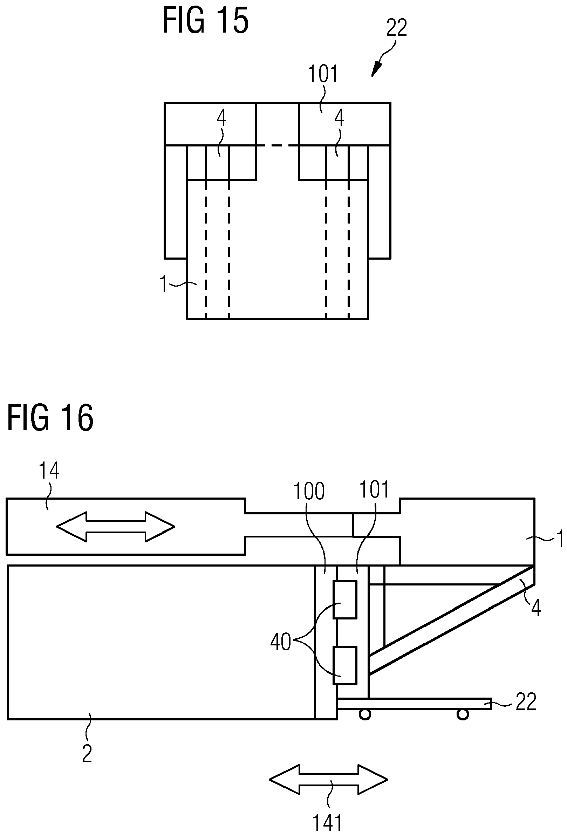

Figur 15 zeigt eine Aufsicht auf einen Adaptionswagen 22 mit zwei Längsträgern 4, welche mittels der in Figur 5 gezeigten Mechanik oder einer gleichwertigen Mechanik flexibel eingestellt werden können, um den Adaptionswagen 22 an die individuellen Abmessungen eines Prüflings 1 zu adaptieren, welcher auf den Längsträgern 4 montiert wird. Der Adaptionswagen 22 beinhaltet ferner eine Wagen-Schnittstelle 101, mittels derer der Adaptionswagen 22 an einen Prüfstand oder an eine Adaptionsstation angekoppelt werden kann.

Figur 15 zeigt die Möglichkeit, die Aufnahme auf einem separaten Adaptionswagen 22 zu installieren. Hierbei ist es sinnvoll, die Wagen-Schnittstelle 101 neben einer mechanischen Schnittstelle auch mit einer automatisch mit der Mechanik kontaktierenden elektrischen Schnittstelle zu versehen.

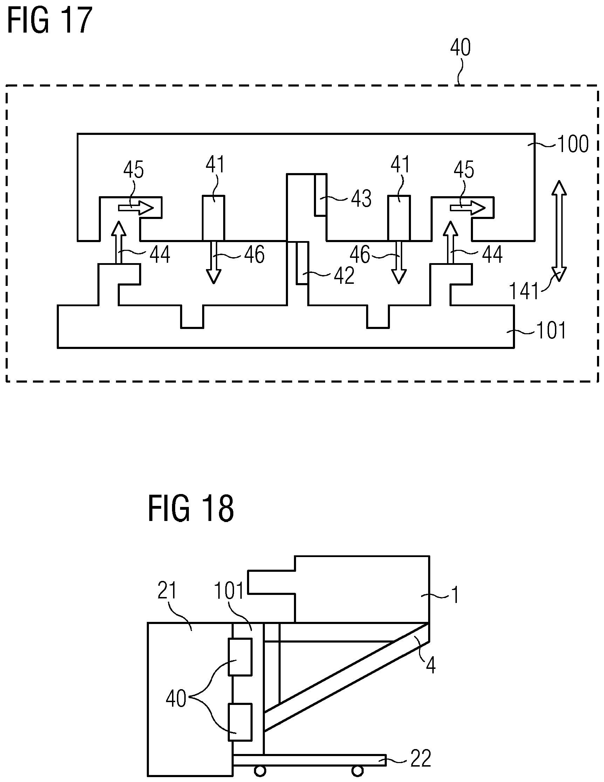

Der Adaptionswagen 22 muss nur während der Adaptierung des Prüflings 1 an der in Figur 18 gezeigten Adaptionsstation 21 mit Strom versorgt werden, damit die Positionen der Längsträger 4 eingestellt werden können. Da die Positionen mechanisch verrastet sind, bleiben sie auch ohne elektrische Versorgung bestehen. Sofern die Stellantriebe im Adaptionswagen 22 angeordnet sind, enthält die Adaptionsstation 21 die restliche Leistungselektronik. Alternativ können auch die Stellantriebe selbst in die Adaptionsstation 21 aufgenommen werden, sodass die notwendigen Bewegungen rein mechanisch über andockbare Wellen auf die vier Achsen der Mechanik des Adaptionswagens 22 übertragen werden. Der Adaptionswagen 22 ist in diesem Fall rein passiv und entsprechend leichter und günstiger zu fertigen.

Der Adaptionswagen 22 kann mit den Längsträgern 4 auch einen einfachen Montagewagen greifen, auf welchem der Prüfling 1 montiert ist.

Figur 16 zeigt den Adaptionswagen 22 aus Figur 15, nachdem dieser an einen Prüfstand 2 angedockt wurde. Hierbei wird zwischen der Wagen-Schnittstelle 101 und einer Prüfstand-Schnittstelle 100 mittels einer oder mehrerer Verbindungen 40 eine schnell zu schließende und schnell zu öffnende mechanische Kopplung bereitgestellt, welche in der Lage ist, die Prüfkräfte am Prüfstand 2 aufzunehmen.

Der Adaptionswagen 22 beinhaltet analog zu den vorangegangenen Ausführungsbeispielen Adaptionsachsen, wie sie beispielsweise als Elemente der Mechanik 3 in Figur 5 gezeigt sind. Mittels dieser Adaptionsachsen sind die Längsträger 4 des Adaptionswagens 22 geeignet eingestellt, um den Prüfling 1 hochgenau auf den Krafterzeuger 14 am Prüfstand 2 auszurichten.

Figur 17 zeigt eine Detailansicht (Aufsicht) einer Wagen-Schnittstelle 101, welche zur Herstellung einer mechanischen und elektrischen Verbindung mit einer Prüfstand-Schnittstelle 100 eines Prüfstands eingerichtet ist. Hierzu wird der Adaptionswagen zunächst entlang eines ersten Bewegungsvektors 44 bewegt. Anschließend wird der Adaptionswagen entlang eines zweiten Bewegungsvektors 45 bewegt, woraufhin Verriegelungsbolzen 41 der Prüfstand-Schnittstelle 100 entlang eines dritten Bewegungsvektors 45 ausgefahren werden und den Adaptionswagen in der Prüfstand-Schnittstelle 100 mechanisch verriegeln.

Diese Verbindung ist sehr robust, so dass sie die Prüfkräfte 141 aufnehmen kann. Bei der Herstellung der Verbindung wird ein elektrischer Stecker 42 an der Wagen-Schnittstelle 101 automatisch in eine elektrische Buchse 43 der Prüfstand-Schnittstelle 100 mitgesteckt. Hierdurch wird eine elektrische Kontaktierung des Adaptionswagens, sowie indirekt auch eines auf dem Adaptionswagen montierten Prüflings bereitgestellt.

Die einheitliche Buchse-Stecker-Verbindung wird beim Andocken des Adaptionswagens an den Prüfstand oder an eine Adaptionsstation automatisch mitgesteckt. Alternativ kann zur elektrischen Anbindung des Adaptionswagens ein separates Adapterkabel manuell gesteckt werden. Zur elektrischen Kontaktierung eines Prüflings, welcher auf dem Adaptionswagen montiert ist, kann dieser zunächst mit dem auf Seiten des Prüflings spezifischen Kabel am Adaptionswagen eingesteckt werden, welcher seinerseits über die standardisierte in Figur 17 gezeigte Buchse-Stecker-Schnittstelle automatisch am Prüfstand oder der Adaptionsstation kontaktiert wird.

Die elektrische Verbindung zwischen Prüfstand und Adaptionswagen kann genutzt werden, um den Weichenantrieb während des Prüfungsablaufs mittels der Längsträger 4 versetzen zu können.

Anstelle der Prüfstand-Schnittstelle 100 kann eine gleichartige Schnittstelle an einer Adaptionsstation vorgesehen sein, an welcher der Adaptionswagen andockt.

Figur 18 zeigt eine solche Adaptionsstation 21, an welche der Adaptionswagen 22 mit seiner Wagen-Schnittstelle 101 angedockt hat, in einer Seitenansicht. Der Adaptionswagen 22 kann an der Adaptionsstation 21 auf den jeweiligen Prüfling 1 automatisch oder manuell eingestellt werden. Im Falle der automatischen Einstellung liefert die Adaptionsstation 21 elektrische Leistung und Steuersignale für die Achsen der Mechanik des Adaptionswagens 22 zur Einstellung der beiden Längsträger 4. Hierbei kann der Adaptionswagen 22 kann mit den Längsträgern 4 auch einen einfachen Montagewagen greifen, auf welchem der Prüfling 1 montiert ist. Der Adaptionswagen 22 selbst ist beispielsweise auf 360° rotierbaren Rädern oder auf Kugeln gelagert.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Die beschriebenen Ausführungsbeispiele, Varianten, Ausführungsformen und Weiterbildungen können frei miteinander kombiniert werden.

## Patentansprüche

1. Anordnung zur Prüfung von Weichenantrieben,
- mit mindestens einer Aufnahmevorrichtung, umfassend
- mindestens zwei Träger (4), welche eingerichtet sind zur Aufnahme eines Weichenantriebs als Prüfling (1) oder zur Aufnahme eines Montagewagens (20), auf welchem ein Weichenantrieb als Prüfling (1) montiert ist, und
- eine Mechanik (3), welche zum Verfahren der Träger (4) sowohl in horizontaler und als auch in vertikaler Richtung eingerichtet ist,
- mit einem Prüfstand (2), der über einen Krafterzeuger (14) verfügt, welcher eingerichtet ist, um Gegenkräfte auf den Prüfling (1) aufzubringen, während der Prüfling (1) auf dem Prüfstand (2) Stellvorgänge ausführt, wodurch der Prüfstand (2) zum Einstellen und/oder Prüfen von Kräften, welche der Prüfling (1) erzeugt, eingerichtet ist, und
- bei der der Krafterzeuger (14) und die Mechanik (3) mechanisch und elektrisch unabhängig voneinander sind, sodass die Träger (4) ohne Beeinflussung des Prüfstands (2) oder des Krafterzeugers (14) verfahrbar sind, wodurch eine vorgegebene Koppelposition zwischen dem Prüfling (1) und dem Krafterzeuger (14) einstellbar ist.

2. Anordnung nach Anspruch 1,
- bei der die Mechanik (3) zum Einstellen eines horizontalen Abstands zwischen den Trägern (4) eingerichtet ist.

3. Anordnung nach einem der vorhergehenden Ansprüche,
- bei der die Mechanik (3) zu einem voneinander unabhängigen Verfahren der Träger (4) sowohl in horizontaler als auch in vertikaler Richtung eingerichtet ist.

4. Anordnung nach einem der vorhergehenden Ansprüche,
- bei der die Mechanik (3) zum Verfahren der Träger (4) in horizontaler und vertikaler Richtung horizontale und vertikale Linearführungen, insbesondere Lineargleitlager, Schwalbenschwanzführungen, Profilschienenführungen oder Käfigschienenführungen, aufweist.

5. Anordnung nach einem der vorhergehenden Ansprüche,
- bei der die Mechanik (3) für jeden der Träger (4) mit einem eigenen horizontalen Linearantrieb (121, 122) und mit einem eigenen vertikalen Linearantrieb (83, 93) ausgerüstet ist, welche für ein automatisiertes Verfahren des jeweiligen Trägers (4) in eine erforderliche Position eingerichtet sind.

6. Anordnung nach Anspruch 5,
- bei der die Mechanik (3) aus mindestens zwei vertikal montierten Kreuztischen und/oder vertikal montierten XY-Linearantrieben ausgebildet ist, auf welchen jeweils einer der Träger (4) montiert ist.

7. Anordnung nach Anspruch 5 oder 6,
- bei der jeder Träger (4) auf einem Trägerschlitten (81, 91) montiert ist, welcher mit dem jeweiligen vertikalen Linearantrieb (83, 93) verfahrbar ist,
- bei der jeder vertikale Linearantrieb (83, 93) auf einem Querschlitten (8, 9) montiert ist, welcher mit dem jeweiligen horizontalen Linearantrieb (121, 122) verfahrbar ist.

8. Anordnung nach einem der Ansprüche 5 bis 7,
- bei der die Linearantriebe (83, 93, 121, 122) mit jeweils parallelen Führungen (82, 92, 111, 112) zusammenwirken, welche zur Führung der jeweiligen Schlitten (81, 91, 8, 9) konstruiert sind, und
- bei der die Linearantriebe (83, 93, 121, 122) jeweils einen hydraulischen oder elektrischen Linearmotor oder Linearaktuator beinhalten.

9. Anordnung nach einem der Ansprüche 5 bis 8,
- mit einer Steuerung, in welcher Trägerpositionen in Abhängigkeit von Typen von Prüflingen einprogrammiert sind, wobei die Steuerung zur Ansteuerung der Linearantriebe (83, 93, 121, 122) und zum automatisierten Verfahren der Träger (4) in die Trägerpositionen eingerichtet ist.

10. Anordnung nach einem der vorhergehenden Ansprüche,
- bei der die Mechanik (3) ausgelegt ist zum Ergreifen und/oder Anheben eines Montagewagens (20), auf welchem der Prüfling (1) durch Verschraubung befestigbar ist, mit den Trägern (4), und
- bei der die Träger (4) Befestigungselemente aufweisen, insbesondere innenseitig angeordnete Bolzen (7), Stifte, Greifarme, Vertiefungen oder horizontale Bohrungen, welche ein Ergreifen des Montagewagens (20), insbesondere durch Klemmung des Montagewagens (20) zwischen den Trägern (4), erlauben.

11. Anordnung nach einem der vorhergehenden Ansprüche,
- bei der die Träger (4) vertikale Gewindebohrungen (52) aufweisen, welche eine Befestigung des Prüfling (1) durch Verschraubung erlauben.

12. Anordnung nach einem der vorhergehenden Ansprüche,
- bei der die Träger (4) außenseitig Befestigungsmittel, insbesondere in horizontalen Gewindebohrungen (51) verschraubte Schwalbenschwanzprofile (6), aufweisen, welche für eine Befestigung zusätzlicher Befestigungselemente für den Prüfling (1), insbesondere Klemmen (61, 62), eingerichtet sind.

13. Anordnung nach einem der vorangegangenen Ansprüche,
- wobei die Aufnahmevorrichtung am Prüfstand (2) selbst oder neben dem Prüfstand (2) auf dem Boden montiert ist.

14. Anordnung nach einem der vorangegangenen Ansprüche,
- bei der der Prüfstand (2) eine Prüfstand-Schnittstelle (100) aufweist, welche mindestens eine Horizontalführung (33) aufweist,
- mit einem Schlitten (30), welcher entlang der Horizontalführung (33) verfahrbar ist, und
- mit mindestens zwei der Aufnahmevorrichtungen, welche nebeneinander an dem Schlitten (30) montiert sind.

15. Anordnung nach Anspruch 14,
- mit einem Fahrwerk (34), insbesondere bestehend aus Rollen, Rädern oder einer Führung, welches den Schlitten (30) auf einem Untergrund abstützt.

16. Anordnung nach Anspruch 14 oder 15,
- mit mindestens einer Schutzwand (35), welche zwischen den Aufnahmevorrichtungen auf dem Schlitten (30) montiert ist, oder
- mit einer Schutzhaube (36), welche an dem Prüfstand (2) montiert ist.

17. Anordnung nach einem der Ansprüche 1 bis 12,
- mit einem Adaptionswagen (22), welcher ein Gestell aufweist, an dem die Aufnahmevorrichtung montiert ist, und
- bei dem das Gestell eine Wagen-Schnittstelle (101) aufweist, über welche der Adaptionswagen (22) mit einer Prüfstand-Schnittstelle (100) des Prüfstands (2) mechanisch koppelbar ist.

18. Anordnung nach Anspruch 17,
mit einer Adaptionsstation (21), welche eingerichtet ist für
- eine mechanische Kopplung der Wagen-Schnittstelle (101) des Adaptionswagens (22) an die Adaptionsstation (21), und
- ein Verfahren der Träger (4) sowohl in horizontaler und als auch in vertikaler Richtung mittels der Mechanik (3).

19. Anordnung nach Anspruch 18,
- bei der die Mechanik (3) für jeden der Träger (4) eine Antriebswelle für ein selbsthemmendes Stellgetriebe zum Verfahren des jeweiligen Trägers (4) in einer x-Richtung aufweist, und
- bei der die Mechanik (3) für jeden der Träger (4) eine Antriebswelle für ein selbsthemmendes Stellgetriebe zum Verfahren des jeweiligen Trägers (4) in einer zur x-Richtung orthogonalen y-Richtung aufweist.

20. Anordnung nach Anspruch 19,
- bei der die Antriebswellen jeweils einen mechanischen Anschluss zur Drehmomentübertragung aufweisen, über welchen die Antriebswellen bei der mechanischen Kopplung des Adaptionswagens (22) an die Adaptionsstation (21) automatisch an Stellantriebe in der Adaptionsstation (21) andockbar sind.

21. Anordnung nach einem der Ansprüche 17 bis 20,
- bei dem die Wagen-Schnittstelle (101) einen elektrischen Steckverbinder beinhaltet, welcher bei einer mechanischen Kopplung des Adaptionswagens (22) an den Prüfstand (2) oder die Adaptionsstation (21) automatisch in einen elektrischen Steckverbinder der Prüfstand-Schnittstelle (100) oder der Adaptionsstation (21) gesteckt wird.

22. Anordnung nach Anspruch 19 und 21,
- bei der der Adaptionswagen (22) für jede Antriebswelle einen Stellantrieb aufweist, und
- bei der die Adaptionsstation (21) über die elektrischen Steckverbinder elektrische Leistung und Steuersignale für die Stellantriebe zum Verfahren der Träger (4) bereitstellt.

23. Anordnung nach einem der vorhergehenden Ansprüche,
- mit einem Montagewagen (20), welcher zur Aufnahme des Weichenantriebs eingerichtet ist, und welcher zwischen den Trägern (4) durch einen Formschluss fixierbar ist.

24. Verfahren zum Prüfen eines Weichenantriebs,
- bei dem mit einer Mechanik (3) mindestens zwei Träger (4) sowohl in horizontaler und als auch in vertikaler Richtung verfahren werden, und
- bei dem ein Weichenantrieb als ein Prüfling (1) auf den Trägern (4) montiert wird, oder
- bei dem die Mechanik (3) mit den Trägern (4) einen Montagewagen (20) ergreift und/oder anhebt, auf welchem ein Weichenantrieb als Prüfling (1) befestigt ist,
- bei dem ein Prüfstand (2) über einen Krafterzeuger (14) Gegenkräfte auf den Prüfling (1) aufbringt, während der Prüfling (1) auf dem Prüfstand (2) Stellvorgänge ausführt, wobei Kräfte, welche der Prüfling (1) erzeugt, eingestellt und/oder geprüft werden, und
- bei dem die Träger (4) vor der Montage des Prüflings (1) ohne Beeinflussung des Prüfstands (2) oder des Krafterzeugers (14) verfahren werden, wodurch eine vorgegebene Koppelposition zwischen dem Prüfling (1) und dem Krafterzeuger (14) eingestellt wird.

25. Verfahren nach Anspruch 24,
- bei dem die Träger (4) unabhängig voneinander sowohl in horizontaler als auch in vertikaler Richtung verfahren werden.

26. Verfahren nach Anspruch 24 oder 25,
- bei dem eine Steuerung, in welcher Trägerpositionen in Abhängigkeit von Typen von Prüflingen einprogrammiert sind, Linearantriebe (83, 93, 121, 122) ansteuert und die Träger (4) automatisiert in eine der Trägerpositionen verfährt.

27. Verfahren nach einem der Ansprüche 24 bis 26,
- bei dem ein Adaptionswagen (22) mit einer Wagen-Schnittstelle (101) an eine Adaptionsstation (21) angedockt wird, wobei
- ein Steckverbinder der Wagen-Schnittstelle (101) automatisch in einen Steckverbinder der Adaptionsstation (21) gesteckt wird, wodurch Stellantriebe des Adaptionswagens (22) mit Elektrizität versorgt werden, oder
- Stellantriebe der Adaptionsstation (21) an mechanische Anschlüsse der Wagen-Schnittstelle (101) zur Drehmomentübertragung angedockt werden,
- bei dem der Adaptionswagen (22) für einen Prüfling (1) oder einen Montagewagen (20) adaptiert wird, indem die Träger (4) des Adaptionswagens (22) durch die Stellantriebe des Adaptionswagens (22) oder die Stellantriebe der Adaptionsstation (21) in Positionen verfahren werden, welche zur Aufnahme des Prüflings (1) oder des Montagewagens (20) geeignet sind,
- bei dem der Prüfling (1) auf dem Adaptionswagen (20) montiert wird oder der Montagewagen (20) zwischen den Trägern (4) formschlüssig geklemmt wird, und
- bei dem der Adaptionswagen (20) mit seiner Wagen-Schnittstelle (101) an einem Prüfstand (2) angedockt wird.

## Claims

1. Assembly for testing point machines,
- having at least one receptacle device comprising at least two supports (4) which are adapted for receiving a point machine as a specimen (1), or for receiving a mounting truck (20) on which a point machine as a specimen (1) is mounted; and
- a mechanism (3) which is adapted for displacing the supports (4) both in the horizontal direction and in the vertical direction;
having a test bed (2) which disposes of a force generator (14) which is adapted for applying counterforces to the specimen (1) while the specimen (1) on the test bed (2) performs actuation procedures, on account of which the test bed (2) is adapted for adjusting and/or testing forces which are generated by the specimen (1); and wherein the force generator (14) and the mechanism (3) in mechanical and electrical terms are mutually independent such that the supports (4) are displaceable without being influenced by the test bed (2) or by the force generator (14), on account of which a predefined coupled position between the specimen (1) and the force generator (14) is adjustable.

2. Assembly according to Claim 1,
wherein the mechanism (3) is adapted for adjusting a horizontal spacing between the supports (4).

3. Assembly according to one of the preceding claims,
wherein the mechanism (3) is adapted for displacing the supports (4) in a mutually independent manner, both in the horizontal direction and in the vertical direction.

4. Assembly according to one of the preceding claims, wherein the mechanism (3) for displacing the supports (4) in the horizontal direction and the vertical direction has horizontal and vertical linear guides, in particular linear friction bearings,
dovetail guides, profiled rail guides, or caged rail guides.

5. Assembly according to one of the preceding claims,
wherein the mechanism (3) for each of the supports (4) is specified with one dedicated horizontal linear drive (121, 122) and with one dedicated vertical linear drive (83, 93), said linear drives both being adapted for automated displacement of the respective support (4) to a required position.

6. Assembly according to Claim 5,
wherein the mechanism (3) is configured from at least two vertically mounted cross tables and/or vertically mounted X-Y linear drives, one of the supports (4) being mounted on each thereof.

7. Assembly according to Claim 5 or 6,
wherein each support (4) is mounted on a support slide (81, 91) which is displaceable by the respective vertical linear drive (83, 93);
wherein each vertical linear drive (83, 93) is mounted on a transverse slide (8, 9) which is displaceable by the respective horizontal linear drive (121, 122).

8. Assembly according to one of Claims 5 to 7,
wherein the linear drives (83, 93, 121, 122) interact with in each case parallel guides (82, 92, 111, 112) which are constructed for guiding the respective slides (81, 91, 8, 9); and
wherein the linear drives (83, 93, 121, 122) each include one hydraulic or electric linear motor or linear actuator.

9. Assembly according to one of Claims 5 to 8,
having a controller in which support positions depending on types of specimens are programmed, whereby the controller is adapted for actuating the linear drives (83, 93, 121, 122) and for automated displacing of the supports (4) to the support positions.

10. Assembly according to one of the preceding claims, wherein the mechanism (3) by way of the supports (4) is conceived for gripping and/or lifting a mounting truck (20), the specimen (1) being fastenable thereto by a screw connection; and
wherein the supports (4) have fastening elements, in particular bolts (7), pins, gripping arms, depressions, or horizontal bores, which are disposed inboard and which permit the mounting truck (20) to be gripped in particular by clamping the mounting truck (20) between the supports (4) .

11. Assembly according to one of the preceding claims, wherein the supports (4) have vertical threaded bores (52) which permit fastening of the specimen (1) by a screw connection.

12. Assembly according to one of the preceding claims, wherein the supports (4) have outboard fastening means, in particular dovetail profiles (6), which are screwed into horizontal threaded bores (51) and which are adapted for fastening additional fastening elements, in particular clamps (61, 62), for the specimen (1).

13. Assembly according to one of the preceding claims, wherein the receptacle device is mounted on the test bed (2) per se, or on the floor beside the test bed (2).

14. Assembly according to one of the preceding claims, wherein the test bed (2) has a test-bed interface (100) which has at least one horizontal guide (33);
having a slide (30) which is displaceable along the horizontal guide (33); and
having at least two of the receptacle devices which are mounted beside one another on the slide (30).

15. Assembly according to Claim 14,
having a running gear (34), in particular composed of rollers, wheels, or a guide, which supports the slide (30) on a ground.

16. Assembly according to Claim 14 or 15,
having at least one protective wall (35) which is mounted between the receptacle devices on the slide (30);
or
having a protective hood (36) which is mounted on the test bed (2).

17. Assembly according to one of Claims 1 to 12,
having an adapter truck (22) which has a frame on which the receptacle device is mounted; and
wherein the frame has a truck interface (101) by way of which the adapter truck (22) is capable of being mechanically coupled to a test-bed interface (100) of the test bed (2).

18. Assembly according to Claim 17,
having an adapter station (21) which is adapted for mechanically coupling the truck interface (101) of the adapter truck (22) to the adapter station (21); and by means of the mechanism (3) for displacing the supports (4) both in the horizontal direction and in the vertical direction.

19. Assembly according to Claim 18,
wherein the mechanism (3) for each of the supports (4) has a drive shaft for a self-locking actuator gear for displacing the respective support (4) in a direction X; and wherein the mechanism (3) for each of the supports (4) has a drive shaft for a self-locking actuator gear for displacing the respective support (4) in a direction Y which is orthogonal to the direction X.

20. Assembly according to Claim 19,
wherein the drive shafts each have a mechanical connector for transmitting torque, by way of which the drive shafts, when mechanically coupling the adapter truck (22) to the adapter station (21), are capable of being automatically docked to actuators in the adapter station (21).

21. Assembly according to one of Claims 17 to 20,
wherein the truck interface (101) has an electric plug connector which when mechanically coupling the adapter truck (22) to the test bed (2) or to the adapter station (21) is automatically plugged into an electrical plug connector of the test-bed interface (100) or of the adapter station (21).

22. Assembly according to Claims 19 and 21,
wherein the adapter truck (22) has an actuator for each drive shaft; and
wherein the adapter station (21) by way of the electrical plug connectors provides electric power and control signals to the actuators, in order for the supports (4) to be displaced.

23. Assembly according to one of the preceding claims, having a mounting truck (20) which is adapted for receiving the point machine and which is capable of being fixed by a form-fit between the supports (4).

24. Method for testing a point machine,
- wherein by way of a mechanism (3) at least two supports (4) are displaced both in the horizontal direction and in the vertical direction; and
- wherein a point machine as a specimen (1) is mounted on the supports (4); or
- wherein the mechanism (3) by way of the supports (4) grips and/or lifts a mounting truck (20) to which a point machine as the specimen (1) is fastened;
- wherein a test bed (2) by way of a force generator (14) applies counterforces to the specimen (1) while the specimen (1) on the test bed (2) performs actuation procedures, wherein forces which are generated by the specimen (1) are adjusted and/or tested; and
- wherein the supports (4) prior to mounting of the specimen (1) are displaced without being influenced by the test bed (2) or by the force generator (14), on account of which a predefined coupled position between the specimen (1) and the force generator (14) is adjusted.

25. Method according to Claim 24,
wherein the supports (4) in a mutually independent manner are displaced both in the horizontal direction and in the vertical direction.

26. Method according to Claim 24 or 25,
wherein a controller, in which support positions depending on types of specimens are programmed, actuates linear drives (83, 93, 121, 122), and in an automated manner displaces the supports (4) to one of the support positions.

27. Method according to one of Claims 24 to 26,
- wherein an adapter truck (22) having a truck interface (101) is docked to an adapter station (21), whereby
- a plug connector of the truck interface (101) is automatically plugged into a plug connector of the adapter station (21), on account of which actuators of the adapter truck (22) are supplied with electricity; or, for transmitting torque, actuators of the adapter station (21) are docked to mechanical connectors of the truck interface (101);
- wherein the adapter truck (22) is adapted to a specimen (1) or a mounting truck (20) in that the supports (4) of the adapter truck (22), by means of the actuators of the adapter truck (22), or the actuators of the adapter station (21), are displaced to positions which are suitable for receiving the specimen (1) or the mounting truck (20);
- wherein the specimen (1) is mounted on the adapter truck (20), or the mounting truck (20) is clamped in a form-fitting manner between the supports (4); and
- wherein the adapter truck (20) by way of the truck interface (101) thereof is docked to a test bed (2).

## Revendications

1. Agencement pour la vérification de commandes d'aiguillages,
- équipé d'au moins un dispositif de réception, comprenant
- au moins deux supports (4) qui sont conçus pour la réception d'une commande d'aiguillage à titre d'éprouvette (1) pour la réception d'un chariot de montage (20) sur lequel est montée une commande d'aiguillage à titre d'éprouvette (1) ; et
- un mécanisme (3) qui est conçu pour le déplacement des supports (4) aussi bien en direction horizontale qu'en direction verticale ;
- équipé d'un banc d'essai (2) qui dispose d'un générateur de forces (14) qui est conçu pour exercer des forces antagonistes sur l'éprouvette (1), tandis que l'éprouvette (1) effectue des opérations de manoeuvre sur le banc d'essai (2), si bien que le banc d'essai (2) est conçu pour le réglage et/ou la vérification de forces que génère l'éprouvette (1) ; et
- dans lequel le générateur de forces (14) et le mécanisme (3) sont indépendants l'un de l'autre du point de vue mécanique et du point de vue électrique, si bien que les supports (4) peuvent se déplacer sans avoir aucune influence sur le banc d'essai (2) ou sur le générateur de forces (14), d'une manière telle que l'on peut régler une position d'accouplement prédéfinie entre l'éprouvette (1) et le générateur de forces (14).

2. Agencement selon la revendication 1,
- dans lequel le mécanisme (3) est conçu pour le réglage d'un écartement horizontal entre les supports (4).

3. Agencement selon l'une quelconque des revendications précédentes,
- dans lequel le mécanisme (3) est conçu pour un déplacement réciproquement indépendant des supports (4) aussi bien en direction horizontale qu'en direction verticale.

4. Agencement selon l'une quelconque des revendications précédentes,
- dans lequel le mécanisme (3) présente, pour le déplacement des supports (4) en direction horizontale et en direction verticale, des guidages linéaires horizontaux et verticaux, en particulier des paliers linéaires à glissement, des guidages en forme de queue d'aronde, des guidages en forme de rails profilés ou des guidages en forme de cages.

5. Agencement selon l'une quelconque des revendications précédentes,
- dans lequel le mécanisme (3) est muni, pour chacun des supports (4), d'une commande linéaire horizontale propre (121, 122) et d'une commande linéaire verticale propre (83, 93), qui sont conçues pour un déplacement automatisé du support respectif (4) dans une position requise.

6. Agencement selon la revendication 5,
- dans lequel le mécanisme (3) est réalisé à partir d'au moins deux tables à mouvements croisés montées à la verticale et/ou d'au moins deux commandes linéaires XY montées à la verticale, sur lesquelles est monté respectivement un des supports (4).

7. Agencement selon la revendication 5 ou 6,
- dans lequel chaque support (4) est monté sur un chariot de support (81, 91) qui peut être déplacé avec la commande linéaire verticale respective (83, 93) ;
- dans lequel chaque commande linéaire verticale (83, 93) est montée sur un chariot transversal (8, 9) qui peut être déplacé avec la commande linéaire horizontale respective (121, 122).

8. Agencement selon l'une quelconque des revendications 5 à 7,
- dans lequel les commandes linéaires (83, 93, 121, 122) coopèrent avec des guidages respectivement parallèles (82, 92, 111, 112) qui sont conçus pour le guidage des chariots respectifs (81, 91, 8, 9) ; et
- dans lequel les commandes linéaires (83, 93, 121, 122) comprennent respectivement un actionneur linéaire ou un moteur linéaire de type hydraulique ou électrique.

9. Agencement selon l'une quelconque des revendications 5 à 8,
- équipé d'une commande dans laquelle des positions des supports sont programmées en fonction des types d'éprouvettes, la commande étant conçue pour l'actionnement des commandes linéaires (83, 93, 121, 122) et pour le déplacement optimisé des supports (4) dans les positions de support.

10. Agencement selon l'une quelconque des revendications précédentes,
- dans lequel le mécanisme (3) est dimensionné pour saisir et/ou pour soulever un chariot de montage (20), sur lequel peut être fixée l'éprouvette (1) par vissage, avec les supports (4) ; et
- dans lequel les supports (4) présentent des éléments de fixation, en particulier des boulons (7), des broches, des bras de préhension, des renfoncements ou des alésages horizontaux, disposés du côté interne, qui permettent de saisir le chariot de montage (20), en particulier par serrage du chariot de montage (20) entre les supports (4).

11. Agencement selon l'une quelconque des revendications précédentes,
- dans lequel les supports (4) présentent des alésages taraudés verticaux (52) qui permettent une fixation de l'éprouvette (1) par vissage.

12. Agencement selon l'une quelconque des revendications précédentes,
- dans lequel les supports (4) présentent des moyens de fixation du côté externe, en particulier des profilés (6) en forme de queue d'aronde vissés dans des alésages taraudés horizontaux (51), qui sont conçus pour une fixation d'éléments de fixation supplémentaire pour l'éprouvette (1), en particulier des pinces (61, 62).

13. Agencement selon l'une quelconque des revendications précédentes,
- dans lequel le dispositif de réception est monté sur le banc d'essai (2) lui-même ou à côté du banc d'essai (2) sur le sol.

14. Agencement selon l'une quelconque des revendications précédentes,
- dans lequel le banc d'essai (2) présente une interface d'éprouvette (100) qui présente au moins un guidage horizontal (33) ;
- équipé d'un chariot (30) qui peut se déplacer le long du guidage horizontal (33) ; et
- équipé d'au moins deux des dispositifs de réception qui sont montés l'un à côté de l'autre contre le chariot (30).

15. Agencement selon la revendication 14,
- équipé d'un châssis (34), en particulier constitué par des rouleaux, des roues ou un guidage, qui supporte le chariot (30) sur un sous-sol.

16. Agencement selon la revendication 14 ou 15,
- équipé d'au moins une paroi de protection (35) qui est montée entre les dispositifs de réception sur le chariot (30) ; ou
équipé d'un capot de protection (36) qui est monté sur l'éprouvette (2).

17. Agencement selon l'une quelconque des revendications 1 à 12,
- équipé d'un chariot d'adaptation (22) qui présente un bâti contre lequel est monté le dispositif de réception ; et
- dans lequel le bâti présente une interface de chariot (101), par laquelle le chariot d'adaptation (22) peut être accouplé par voie mécanique à une interface d'éprouvette (100) de l'éprouvette (2).

18. Agencement selon la revendication 17,
- équipé d'un poste d'adaptation (21) qui est conçu pour :
- un accouplement mécanique de l'interface de chariot (101) du chariot d'adaptation (22) au poste d'adaptation (21) ; et
- un déplacement des supports (4) aussi bien en direction horizontale qu'en direction verticale au moyen du mécanisme (3).

19. Agencement selon la revendication 18,
- dans lequel, le mécanisme (3) présente, pour chacun des supports (4), un arbre d'entraînement pour un engrenage de réglage de type autobloquant pour le déplacement du support respectif (4) dans une direction x ; et
- dans lequel, le mécanisme (3) présente, pour chacun des supports (4), un arbre d'entraînement pour un engrenage de réglage de type autobloquant pour le déplacement du support respectif (4) dans une direction y orthogonale par rapport à la direction x.

20. Agencement selon la revendication 19,
- dans lequel les arbres d'entraînement présentent respectivement un raccord mécanique pour la transmission du couple, par lesquels les arbres d'entraînement, lors de l'accouplement mécanique du chariot d'adaptation (22) au poste d'adaptation (21), peuvent être arrimés automatiquement à des commandes de réglage dans le poste d'adaptation (21).

21. Agencement selon l'une quelconque des revendications 17 à 20,
- dans lequel l'interface de chariot (101) comprend un connecteur électrique qui, lors d'un accouplement mécanique du chariot d'adaptation (22) à l'éprouvette (2) ou au poste d'adaptation (21), vient s'enficher de manière automatique dans un connecteur électrique de l'interface d'éprouvette (100) ou du poste d'adaptation (21).

22. Agencement selon les revendications 19 et 21,
- dans lequel le chariot d'adaptation (22) présente une commande de réglage pour chaque arbre d'entraînement ; et
- dans lequel le poste d'adaptation (21) fournit, via le connecteur électrique, une énergie électrique et des signaux de commande pour les commandes de réglage à des fins de déplacement des supports (4).

23. Agencement selon l'une quelconque des revendications précédentes,
- équipé d'un chariot de montage (20) qui est conçu pour la réception de la commande d'aiguillage et qui peut être fixé entre les supports (4) via une liaison par complémentarité de forme.

24. Procédé pour la vérification d'une commande d'aiguillage,
- dans lequel, avec un mécanisme (3), au moins deux supports (4) se déplacent aussi bien en direction horizontale qu'en direction verticale ; et
- dans lequel une commande aiguillage est montée, à titre d'une éprouvette (1), sur les supports (4) ; ou
- dans lequel, le mécanisme (3) saisit et/ou soulève, avec les supports (4), un chariot de montage (20), sur lequel est fixée une commande d'aiguillage à titre d'éprouvette (1) ;
- dans lequel une éprouvette (2) exerce, via un générateur de forces (14), des forces antagonistes sur l'éprouvette (1), tandis que l'éprouvette (1) effectue des opérations de manoeuvre sur le banc d'essai (2), les forces que génère l'éprouvette (1) étant réglées et/ou vérifiées ; et
- dans lequel les supports (4), avant le montage de l'éprouvette (1), sont soumis à un déplacement sans aucune influence sur l'éprouvette (2) ou sur le générateur de forces (14), si bien qu'une position d'accouplement prédéfinie est réglée entre l'éprouvette (1) et le générateur de forces (14).

25. Procédé selon la revendication 24,
- dans lequel les supports (4) se déplacent indépendamment l'un de l'autre aussi bien en direction horizontale qu'en direction verticale.

26. Procédé selon la revendication 24 ou 25,
- dans lequel une commande, dans laquelle sont programmées des positions des supports en fonction des types d'éprouvette, actionne des commandes linéaires (83, 93, 121, 122) et déplace les supports (4) de manière automatisée dans une des positions des supports.

27. Procédé selon l'une quelconque des revendications 24 à 26,
- dans lequel un chariot d'adaptation (22) est arrimé avec une interface de chariot (101) à un poste d'adaptation (21), dans lequel
- un connecteur de l'interface de chariot (101) vient s'enficher de manière automatique dans un connecteur du poste d'adaptation (21), si bien que des commandes de réglage du chariot d'adaptation (21) sont alimentées en électricité ; ou
- des commandes de réglage du poste d'adaptation (21) sont arrimées à des raccords mécaniques de l'interface de chariot (101) à des fins de transmission du couple ;
- dans lequel le chariot d'adaptation (22) est adapté pour une éprouvette (1) ou pour un chariot de montage (20), les supports (4) du chariot d'adaptation (22) étant déplacés via les commandes de réglage du chariot d'adaptation (22) ou via les commandes de réglage du poste d'adaptation (21) dans des positions qui sont appropriées pour la réception de l'éprouvette (1) ou du chariot de montage (20) ;
- dans lequel l'éprouvette (1) est montée sur le chariot d'adaptation (20) ou bien le chariot de montage (20) est serré par complémentarité de forme entre les supports (4) ; et
- dans lequel le chariot d'adaptation (20) est arrimé avec son interface de chariot (101) à une éprouvette (2).
